# EUROPEAN PATENT SPECIFICATION

(11) **EP 1 927 555 B1**
(45) Date of publication and mention of the grant of the patent: **17.03.2010**
(21) Application number: 07107109.6
(22) Date of filing: 27.04.2007
(51) Int. Cl.: B65D 90/26, F16K 1/22

(54) **Load limiting device for tanks used for storing liquid fuels**
Ladungsbegrenzungsvorrichtung für zur Speicherung von Flüssigbrennstoff verwendete Tanks
Dispositif de limitation de charge pour des réservoirs utilisés pour le stockage de carburants liquides

(30) Priority: 01.12.2006 IT MI20062318
(43) Date of publication of application: 04.06.2008
(73) Proprietor: Ridart S.r.l., 21013 Gallarate (VA) (IT)
(72) Inventor: Meneghini, Davide, 21040 Morazzone (Varese) (IT)
(74) Representative: De Gregori, Antonella

(56) References cited:
- FR-A- 2 252 979
- FR-A- 2 355 736
- FR-A- 2 675 476
- US-B1- 6 913 047

## Description

The present invention refers to a load limiting device for fixed tanks, used for storing liquid fuels derived from oil.

The tanks used for storing liquid fuels, normally laid underground beneath the refuelling stations, are provided with a supply system which comprises a load mouth of the fuel, usually supplied by a tanker, a vent pipe for the vapours produced from the fuel, to make flow in the tanker itself, and a balance tube connected with the environment, to compensate the pressure differences between the inside the tank and the outside environment.

Such tanks must be equipped, according to the current laws, with particular devices called load limiters, capable of automatically preventing the level of the liquid contained in the tank itself from exceeding a specific maximum filling value. This permits reducing the risks of fire and explosion which could take place during the transfer of the fuel from the tanker to the tank, as well as reducing the risks of environmental pollution, especially those tied to the possible contamination of groundwater tables.

Current law establishes a first filling level of the tank, over which the load limiting device intervenes for considerably the supply flow of the fuel from the tanker, and a second filling level, at the reaching of which the load limiting device, save for an allowable loss, blocks the liquid flow in the storage tank immediately before the maximum filling level is reached.

One load limiting device which is known at the state of the art and particularly diffused is composed of an interception valve placed in the load tube of the fuel inside the tank, immediately under the manhole cover of the tank, if underground, and equipped with an oscillating shutter operatively connected to a float. Depending on the filling level reached by the fuel in the tank, the float is capable of partially or completely closing the shutter so to prevent the maximum threshold level permitted by law from being exceeded.

A load limiting device known at the state of the art is disclosed, for example, in document FR-A-2355736.

Nevertheless, while resulting particular strong, economical and of easy installation, the known load limiting devices do not have, beyond the float, effective means capable of controlling the opening and closing, and more in general the positioning of the oscillating shutter to ensure the maximum functioning effectiveness of the same device. For example, due to the thrust generated by the fuel, whether it is fed in the tank by gravity or under pressure by means of pump, it is possible that accidental closures of the oscillating shutter occur well before the maximum level is reached inside the tank, thus making the filling operations quite difficult.

The main object of the present invention is therefore that of making a load limiting device, for underground tanks or above-ground tanks used for storing liquid fuels, which in addition to preventing the excessive filling of the tank, in accordance to that foreseen by the current laws, also permits facilitating and expediting the filling operations, eliminating the possibility that the interception valve of the fuel is activated (it closes) in an undesired manner, that it recloses at the attainment of the first filling level of the tank, partially reopens after the closure of the supply pumps of the tanker and definitively recloses at the attainment of the second filling level of the tank.

This and other objects of the present invention are attained by making a load limiting device for tanks used for storing liquid fuels as set forth in claim 1.

Further characteristics of the invention are indicated in the subsequent claims.

The characteristics and advantages of a load limiting device for tanks useful for storing liquid fuels according to the present invention will be more evident from the following description, exemplifying and non-limiting, referred to the attached schematic drawings in which:
Figure 1A is a side elevation, section view, of a first embodiment of the load limiting device for tanks according to the present invention;
Figure 1B is a cross section of the load limiting device of figure 1;
Figure 2 is a side elevation, partial section view of the load limiting device of figure 1;
Figures 3 - 8 are section views which illustrate the load limiting of figure 1 during its functioning steps;
Figure 9 is a side elevation view, in partial section, of a valve which cooperates with the load limiting device according to the invention, in the case of fuel supply at particularly high pressures;
Figure 10A is a side elevation, section view, of a second embodiment of the load limiting device for tanks according to the present invention;
Figure 10B is a cross section view of the load limiting device of figure 10;
Figure 11 is a side elevation, partial section view of the load limiting device of figure 10; and
Figure 12A - 18B are section views which illustrate the load limiting device of figure 10 during its functioning steps.

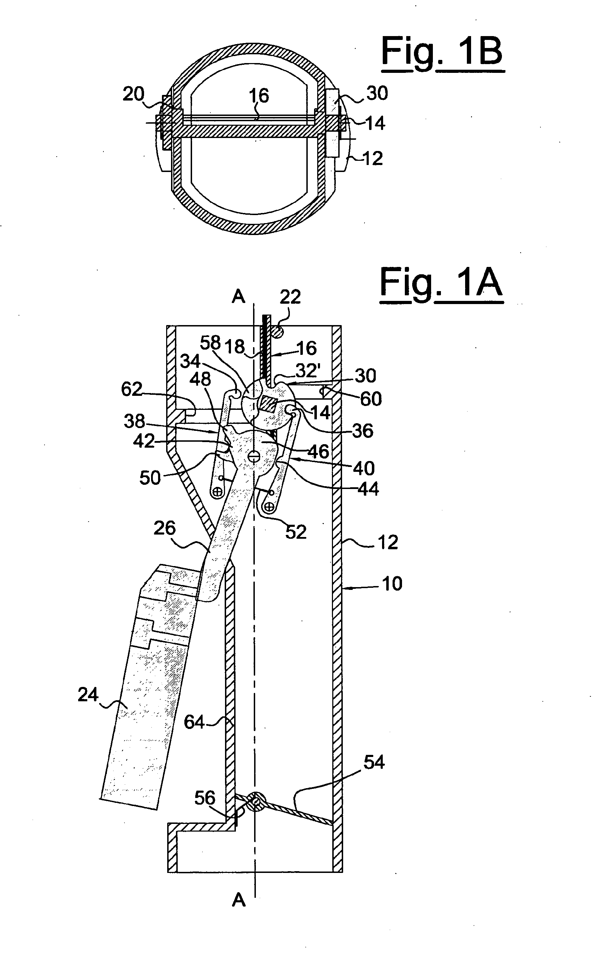

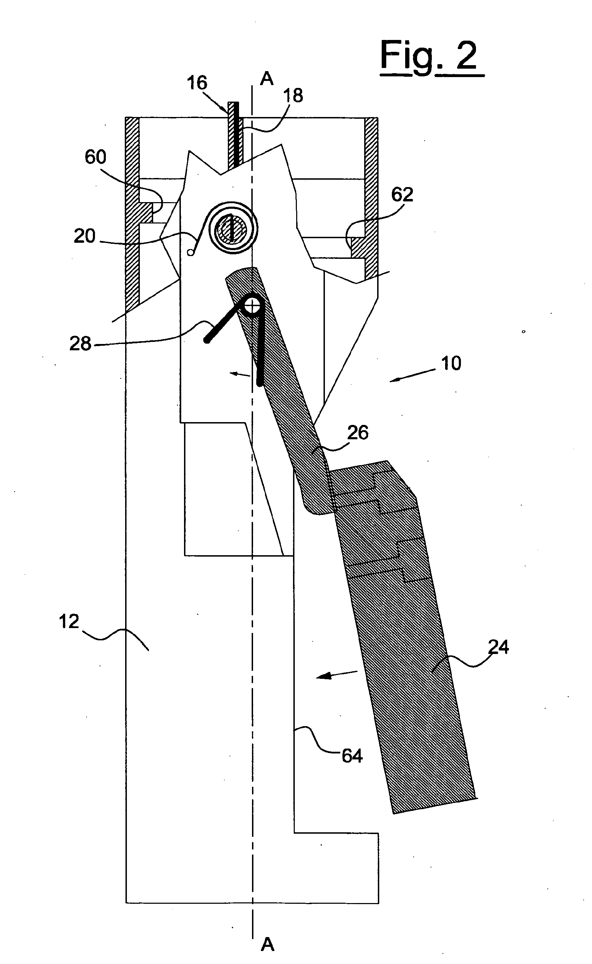

With reference in particular to figures 1A, 1B and 2, a first embodiment is shown of a load limiting device for tanks used for storing liquid fuels according to the present invention, the device being indicated in its entirety with the reference number 10.

The device 10 comprises a hollow tubular body 12 which forms a tube that can be connected to the load mouth of the tank (not shown) inside of which the fuel flows, supplied by gravity or by means of pump, for example from a tanker. On the inner wall of the tube 12, an oscillating shutter 16 is hinged by means, for example, of a rotation shaft 14 centrally bound with respect thereto, in the form of a steel plate, adapted to regulate the quantity of liquid fuel which flows within the conduct 12 itself. In order to avoid losses towards the outside, the rotation shaft 14 can be provided with a pair of seal rings of O-ring type, one for each end, between the inner wall of the tube 12 and the oscillating shutter 16.

The oscillating shutter 16, in turn preferably provided with at least one gasket seal 18 on its external circumferential edge, is configured to assume a first load position, wherein it lies on a plane substantially parallel to the vertical axis A of the tube 12 to permit the flow of fuel inside the tank, a second closed position, wherein it is horizontally positioned to completely obstruct the tube 12, and at least a third partial opening position, wherein it permits the passage of a limited flow of fuel. In such closed position, the shutter 16 is supported on upper 60 and lower 62 abutment reliefs made on the inner wall of the tube 12, so to block the flow of fuel coming from the supply circuit of the tanker.

More precisely, at the rotation shaft 14 of the oscillating shutter 16, at least one elastic element 20 is provided, such as a spiral spring, which permits the total or partial opening of the oscillating shutter 16 itself and is loaded so to maintain said oscillating shutter 16 in the vertical or load position of the fuel, shown for example in figure 1A. A pin 22 or equivalent element is therefore provided on the inner wall of the tube 12 which acts as a stop for the oscillating shutter 16 loaded by the spring 20, in such a manner that said oscillating shutter 16, in its load position, remains slightly tilted (by about 1°) with respect to the vertical axis A of the tube 12, so that its subsequent closing is favoured when necessary.

In order to be driven, the oscillating shutter 16 is operatively connected to a float 24, arranged externally with respect to the tube 12 and hinged along the external wall by means of one or more arms 26. The float 24, made with a low density material, for example polyurethane, so to be moved by the fuel present inside the tank, is then provided with at least one elastic element 28, loaded to permit the float 24 itself to be maintained in a rest position tilted about 20° with respect to the vertical axis A of the tube 12.

The elastic element 28 can consist of, for example, a metal spring bound at the pivot point of the arms 26 of the float 24, but it can also be positioned in any point of the float 24 so that it attains the abovementioned rest tilt.

The use of the elastic element 28 is due to the fact that, in order to be mounted on the load mouth of the tank, the device 10 must normally be inserted in a hole slightly wider than the maximum circumference of the tube 12. In the mounting step, the float 24 must be manually pushed against the outer wall of the tube 12, in the direction indicated by the arrow F of figure 2, in order to reduce the overall transverse dimensions of the entire device 10. For this reason, on the tube 12, a portion with reduced diameter section can be provided which forms an outer recessing 64 in which the float 24 can be made to manually return during the installation operations of the load limiting device 10 in the tank.

According to the invention, on the rotation shaft 14 of the oscillating shutter 16, preferably in a diametrically opposite position with respect to the elastic element 20, at least one cam element 30 is made integral, provided with one or more notches 32, 32' adapted to cooperate with the shaped ends 34, 36 of one or more lever elements 38, 40, driven by at least one of the arms 26 of the float 24, to maintain the oscillating shutter 16 in one or more predefined operative positions during a same functioning cycle.

More precisely, the lever elements 38 and 40 are hinged, at their lower ends opposite their shaped ends 34 and 36, on the outer wall of the tube 12 and have protuberances 42, 44 which cooperate with a cam surface 46 provided at the pivot point of at least one of the arms 26 of the float 24. In turn, such cam surface 46 of the float 24 also has one or more protuberances 48, 50 which are engaged in at least one corresponding cavity 58 made on the cam element 30. The lever elements 38 and 40 are therefore interconnected by means of at least one elastic element 52, like a traction spring, provided at their lower ends hinged on the wall of the tube 12.

Inside the tube 12, below the oscillating shutter 16, a further valve 54 can finally be provided, made in the form of a deflector in the illustrated embodiment, with a nonreturn function for the vapours present inside the tank. Essentially, the deflector 54 reduces the possibility of vapour flow from the top of the tank towards the load tubing: it is capable of being automatically opened in the presence of an even minimum flow of fuel entering the tank, while it closes, in the absence of flow, due to the thrust effect of a spring 56.

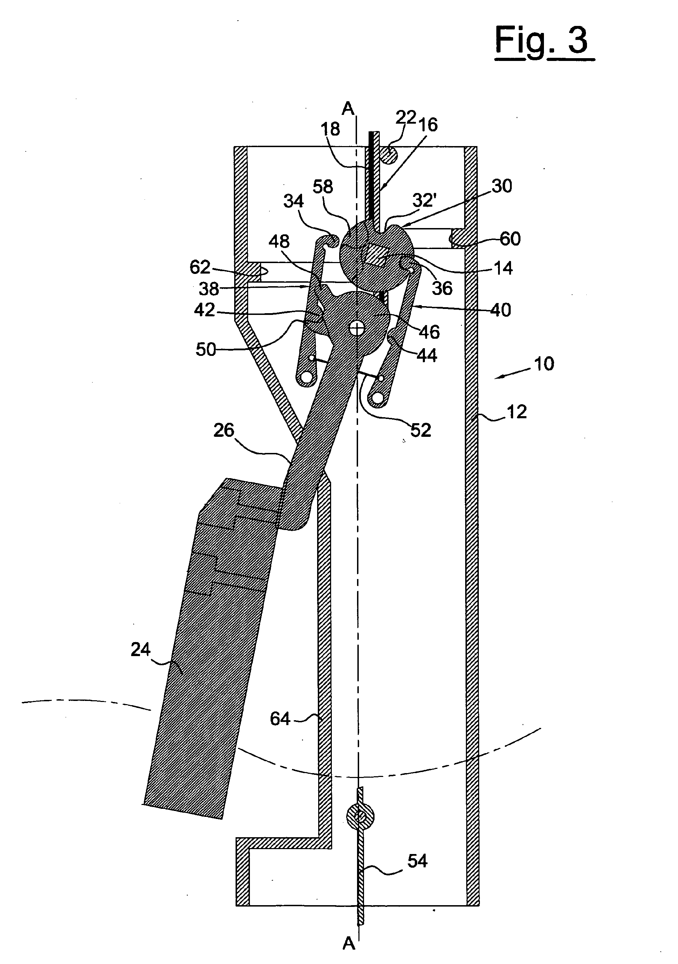

With reference to figures 3 - 8, the functioning of the load limiting device 10 will now be described for tanks used for storing liquid fuels shown in figures 1A, 1B and 2.

In figure 3, the device 10 is shown in the configuration which permits loading the fuel inside the tank, i.e. when the tank itself is empty or when the fuel at its interior has not reached the first filling level provided by law. In this configuration, the oscillating shutter 16 is found in open position, i.e. the nearly vertical position which permits discharging the fuel, due to the thrust of the spring 20 on the shaft 14. Also the float 24 is found in its rest position, tilted about 20° with respect to the vertical axis A of the tube 12, due to the spring 28 which acts on its arms 26 hinged to the tube 12 itself.

One of the two lever elements, for example the lever 40, has its upper end 36 wedged in one of the notches 32 of the cam element 30, therefore not permitting that the thrust of the liquid entering the tank favours the rotation of about 90° of the oscillating shutter 16, determining the accidental closure of the tube 12.

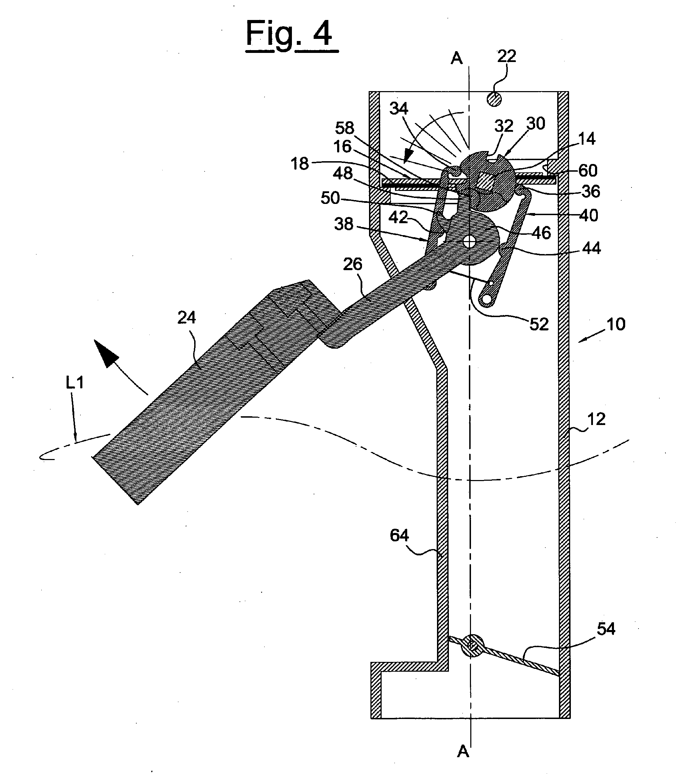

When the fuel inside the tank reaches the first filling level L1 (figure 4), the float 24 is raised due to the thrust exerted thereon by the fuel itself. The attainment of the level L1 simultaneously determines the disengagement of the upper end 36 of the lever 40 from the corresponding notch 32 of the cam element 30, due to the rotation of the cam surface 46, provided on one of the arms 26 of the float 24, which acts on the protuberance 44 of the lever 40.

Simultaneously, the protuberance 48 of the float 24 is engaged in the corresponding cavity 58 made on the cam element 30, imparting a rotation start to the shutter 16 which will cause the temporary total closure, by means of support on the abutment reliefs 60 and 62, of the shutter 16 itself, favoured by the thrust of the entering fuel flow.

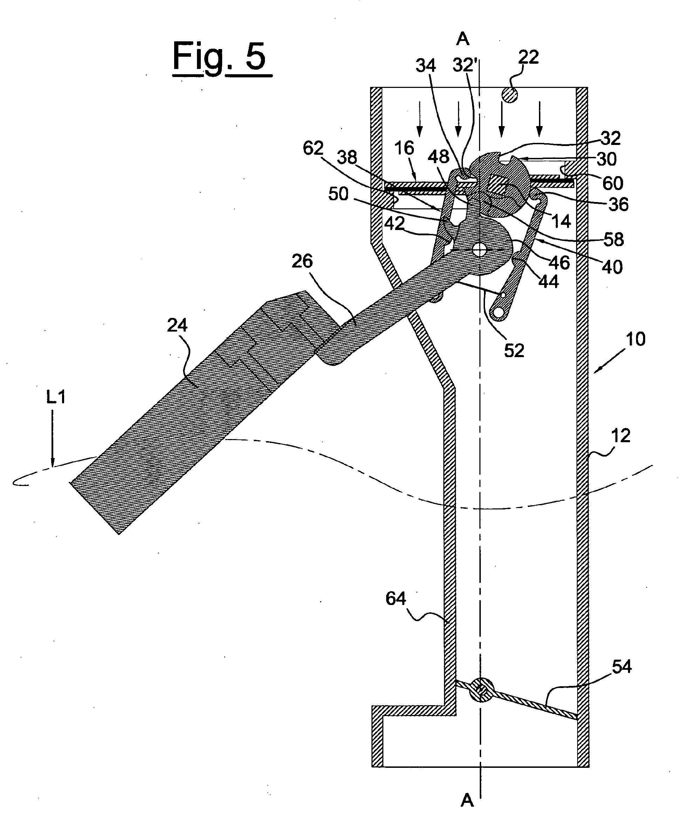

Due to the pressure exerted by the fuel, since the supply circuit is still open, the shutter 16 is maintained in this temporary closure position (figure 5) until the discharge valve of the tanker used for the refuelling is closed by the operator. In this step, the float 24 is raised in an imperceptible manner; without however intervening on the shutter 16, due to the so-called "escape flow" effect, i.e. a moderate quantity of fuel which can pass through the device 10 after the closure of the shutter 16 itself.

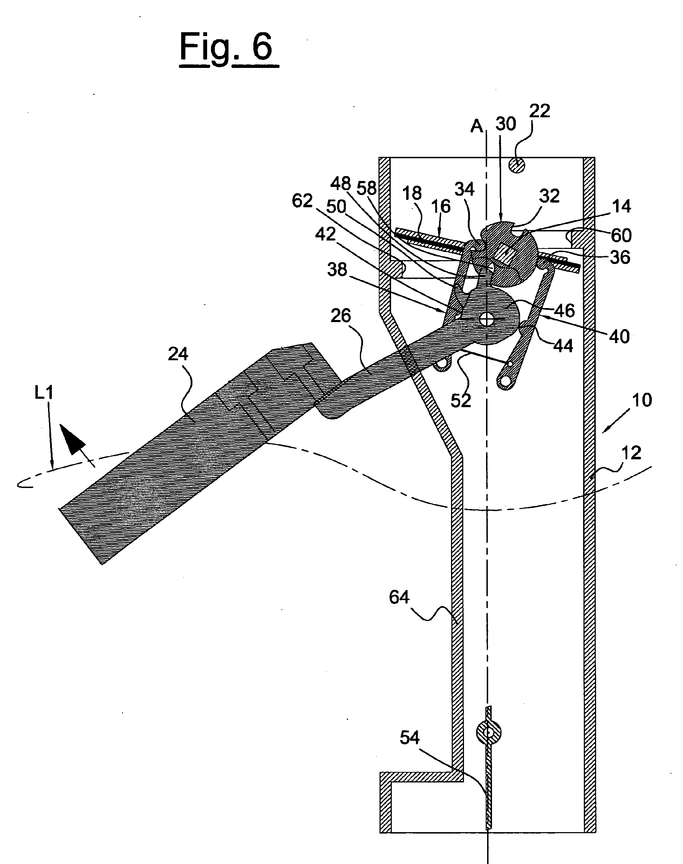

The diminution of the entering fuel pressure, due to the deactivation of the tanker discharge valve, causes, due to the thrust exerted by the spring 20 fit on the shaft 14, a partial reopening of the shutter 16. The opening level of the shutter 16 is determined by the insertion of the shaped end 34 of the lever 38 in the additional notch 32' of the cam element 30 (figure 6). In such a manner, the shutter 16 cannot return in a completely open position until the fuel present in the tank has descended under the level L1. Moreover, a possible reopening of the discharge valve of the tanker will automatically lead to the total closure of the tube 12 due to the increase of pressure, thus avoiding the overfilling of the tank.

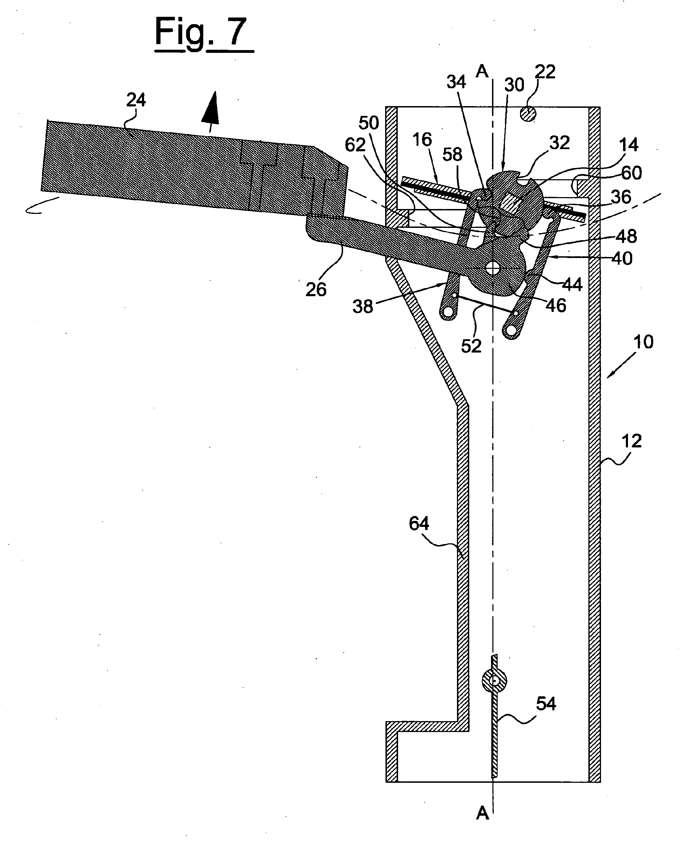

At this point, the tanker operator, before disconnecting the supply system, must wait for the emptying by gravity of the residual fuel in the system itself. The discharge of the residual fuel in a quantity defined "stopping volume", which flows in the tank before its complete and definitive closure, now occurs at reduced speed, while the float 24 slowly approaches (figure 7) the second filling level L2 set by law.

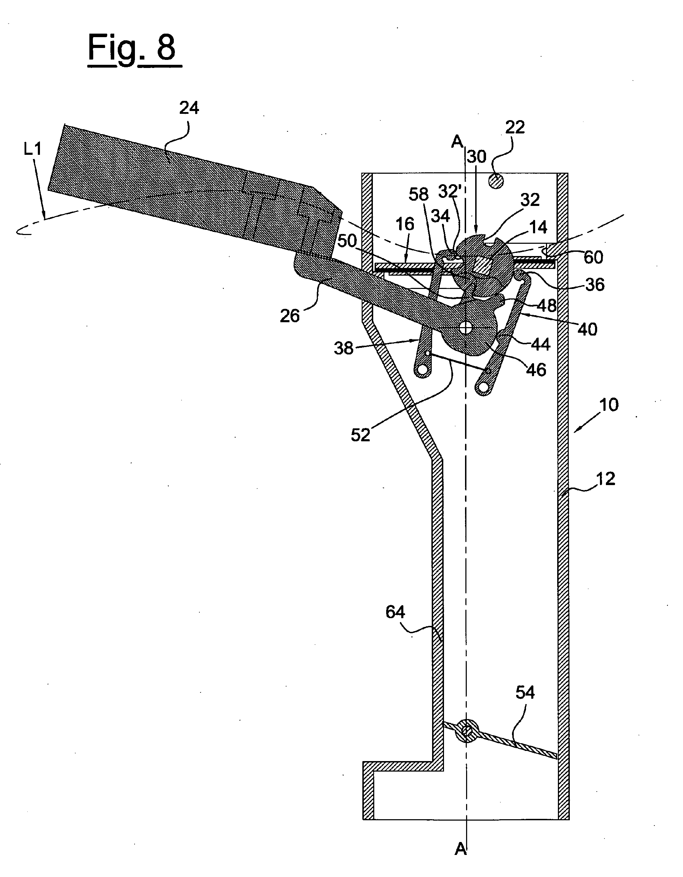

When the level L2 is nearly reached (figure 8), the cam element 30 is newly intercepted, at its cavity 58, by the protuberance 50 of the arm 26 of the float 24, causing with a final thrust on the shutter 16 the total and definitive closure of the tube 12.

Therefore, it can be easily understood that, from the beginning of the fuel loading to time when the float 24 begins to rise following the filling of the tank, the accidental closure of the oscillating shutter 16 cannot at all occur, since the cam element 30 is capable of rotating only if released from the levers 38 and 40, in turn driven by the cam surface 46 provided at the pivot point of one of the arms 26 of the float 24.

Since the float 24 of the device 10 according to the invention is not directly connected to the shutter 16, as occurs instead in the prior art devices, even a violent closure of such shutter 16 does not have repercussions on the good functioning of the entire load limiting device.

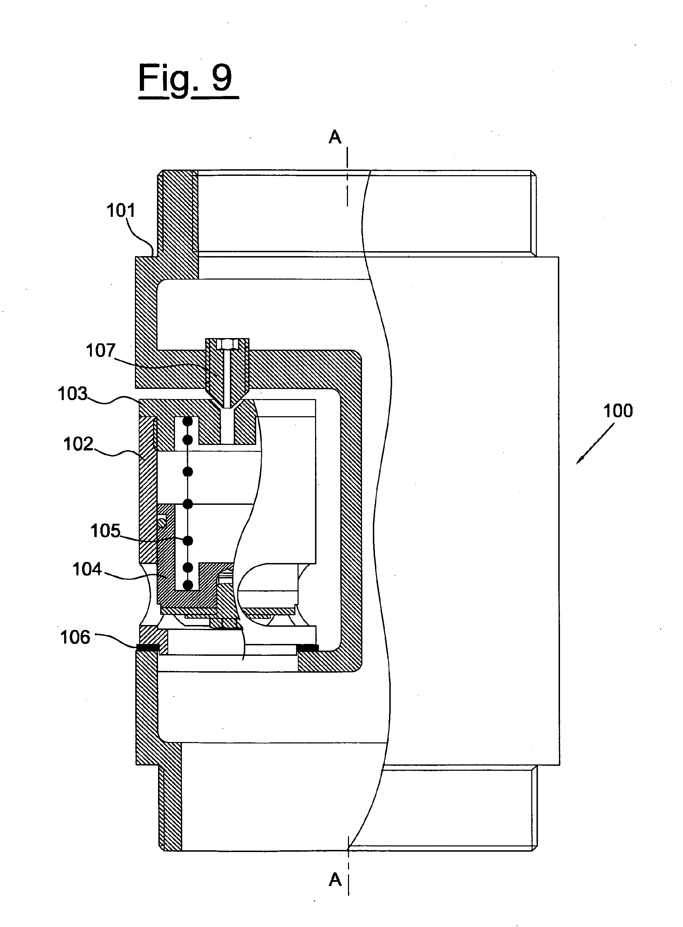

In figure 9, a safety valve 100 is shown which cooperates with the load limiting device 10 according to the invention in the case of fuel supply at particularly high pressures. The valve 100 can be screwed on the upper part of the tube 12 in order to at least partially absorb the water hammering generated by the closure of the tube 12 itself, following the attainment of the maximum permitted fuel level inside the tank.

The main body 101 of the valve 100 is constructed in aluminium. A jacket 102 is laterally inserted, also obtainable from the body 101 itself and closed by a cap 103, in which a piston 104 slides on which a seal of O-ring type and a gasket are mounted. Due to a spring 105, the piston 104 closes a lower hole. The entire group composed of the jacket 102, cap 103, piston 104 and spring 105 is thrust on a suitable seat by a pin 107 equipped with a little hole, the seal on said seat being ensured by a gasket 106.

A pressure increase of greater than 2 bars in the fuel supply circuit causes the opening of the piston 104, which releases the excess liquid. Below such pressure value, due to the re-balancing of the inner pressures, the piston 104 is thrust on its seat, ensuring the necessary seal.

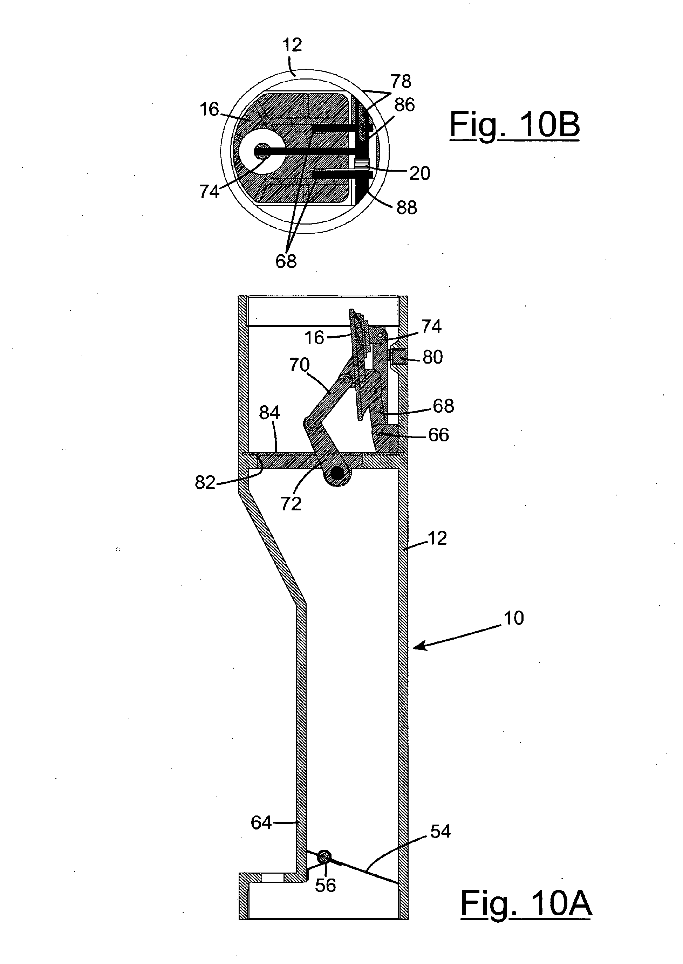

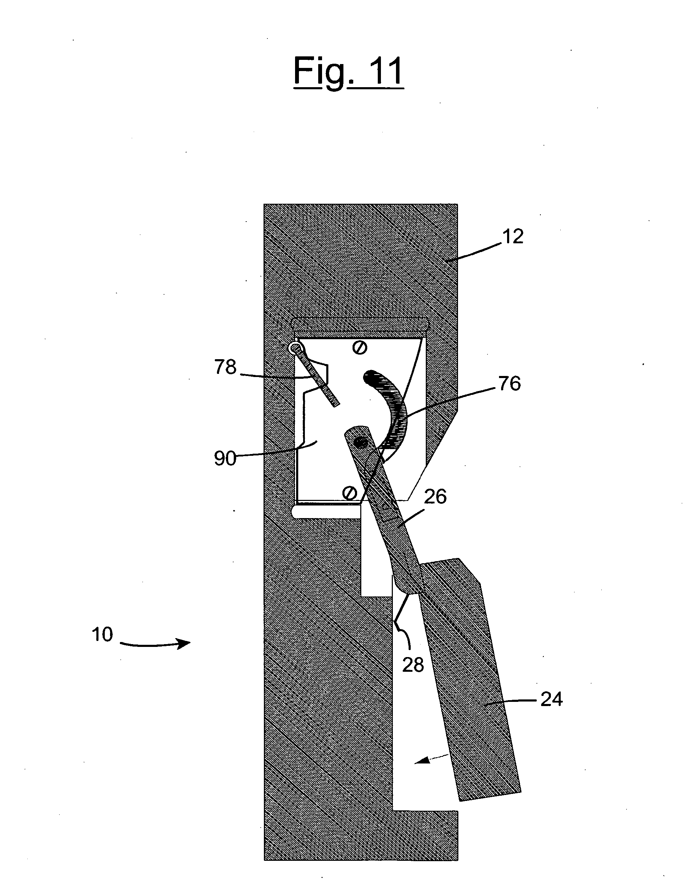

In figures 10A, 10B and 11, a second embodiment is shown of the load limiting device 10 for tanks used for storing liquid fuels according to the present invention.

In this embodiment, the shutter 16 is hinged in 66 to the inner wall of the tube 12, by means of one or more levers 68 and is connected to the cam element 30 by means of a pair of levers 70 and 72 hinged together. On the plate which forms the shutter 16, a through hole is made (not shown) having dimensions (diameter) considerably smaller than the overall dimensions (diameter) of the plate 16 itself. The function of the hole is that of considerably slowing the fuel flow, without blocking it, when the shutter 16 is found in a closed position, as will be better specified below.

Around the same pin 66 is hinged to the inner wall of the tube 12, also a second shutter 74 or secondary shutter, whose function is that of closing the hole made on the main shutter 16 with a slight delay with respect to the closure of the shutter 16 itself.

The secondary shutter 74 is driven by a control cam 76 (figure 11) made integral with one of the arms 26 of the float 24. The control cam 76 is configured in order to act on a shaft 78 which drives the secondary shutter 74 immediately after the closure of the main shutter 16, causing the temporary total closure of the device 10 upon reaching the first filling level L1 inside the tank.

On the inner wall of the tube 12, on which the second shutter 74 is hinged, a magnet 80 is moreover provided whose purpose is that of maintaining said second shutter 74 in a vertical position, or open position of the hole made on the main shutter 16, until the intervention of the control cam 76.

The closure seat 82 of the main shutter 16, made on the inner wall of the tube 12, is provided with a sealing gasket 84, while two brass bushes 86 and 88 are firmly fixed on the inner wall of the tube 12 which serve to make the work of the levers 68 independent, levers 68 mounted on the outer diameter of the bushes 86 and 88 themselves, with respect to the work of the shaft 78, which by rotating instead inside the bushes 86 and 88 does not experience the force to which the levers 68 are subjected in the closing step of the main shutter 16. In such a manner, the secondary shutter 74 can be lowered without impediments.

Alternatively, the sealing gasket 84 can also be directly mounted on the main shutter 16: in this manner, the closure seat 82 will remain a simple metal seat.

The load limiting device 10 according to the present embodiment is completed by a protection casing 90 which, applied in a removable manner on the tube 12, envelops the shutter group and the cam mechanism and permits their inspection. The protection casing 90 can also be applied to the load limiting device 10 described with reference to the previous embodiment.

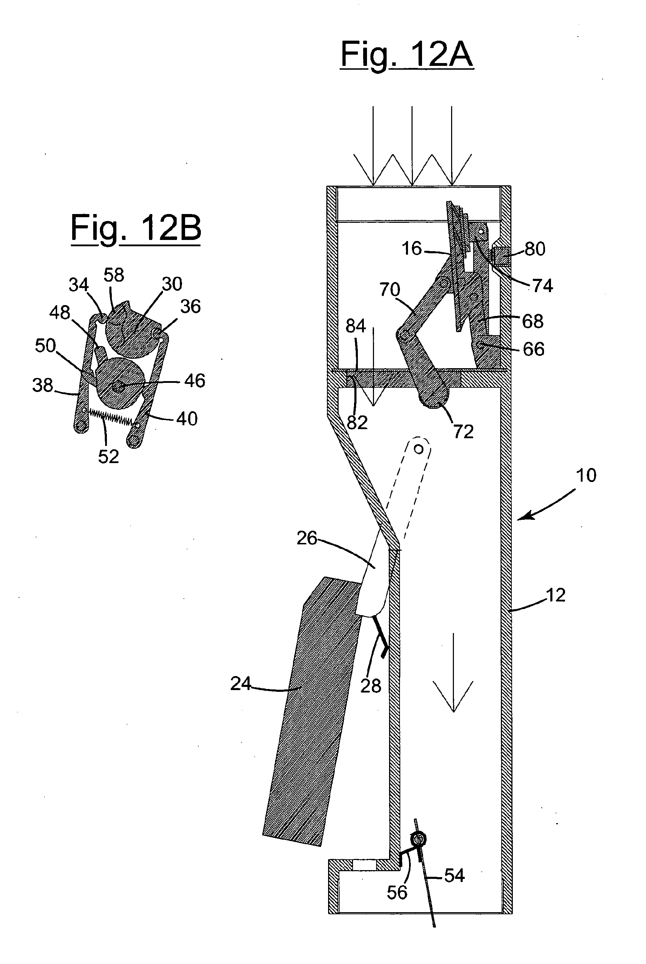

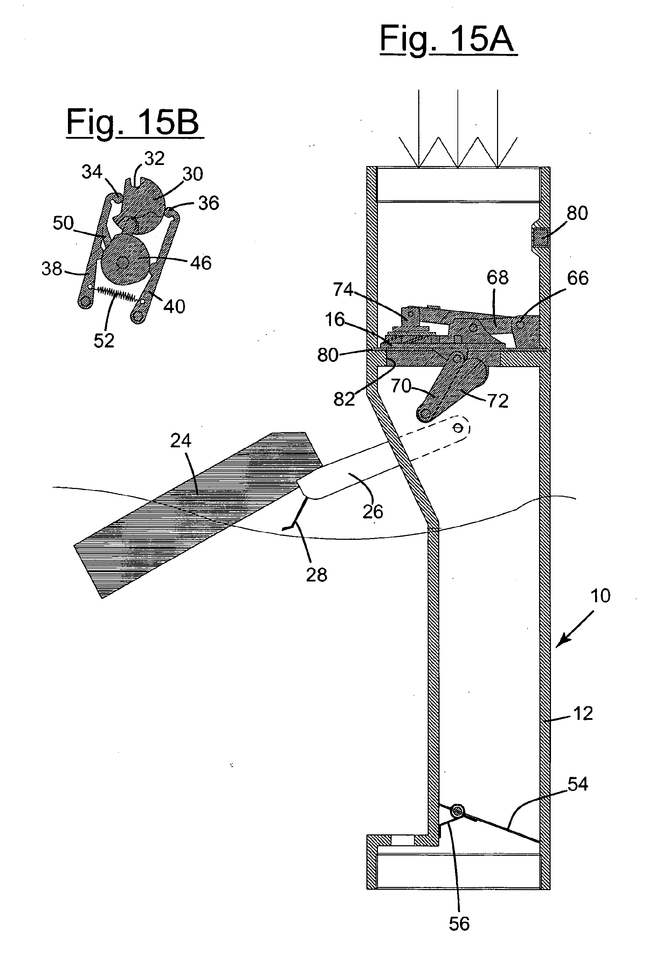

With reference now to figures 12A - 18B, the functioning will now be described of the load limiting device 10 for tanks used for storing liquid fuels shown in figures 10A, 10B and 11.

Device 10 is shown in figure 12A in the configuration which permits the loading of fuel inside the tank, i.e. when the tank itself is empty or when the fuel at its interior has not reached the first filling level provided by law. In this configuration, both the main shutter 16 and the secondary shutter 74 are found in open position, i.e. the nearly vertical position which permits the discharge of the fuel. Also the float 24 is found in its rest position, tilted about 20° with respect to the vertical axis A of the tube 12, due to the spring 28. The lever elements are found in the position (figure 12B) previously described with reference to figure 3.

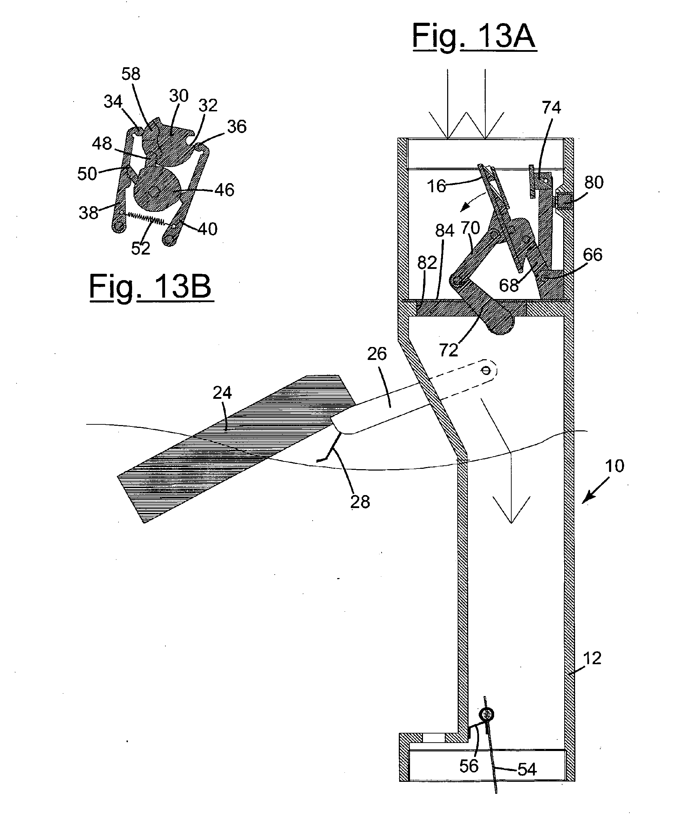

When the fuel inside the tank reaches the first filling level L1 (figure 13), the float 24 is raised due to the thrust exerted thereon by the fuel itself.

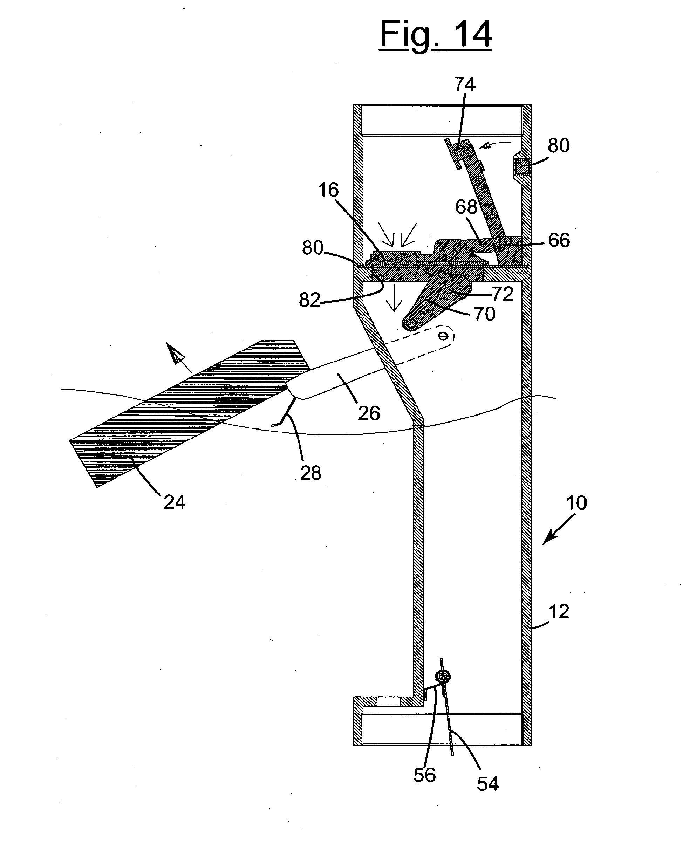

The cam mechanism, driven as in figure 4, permits lowering only the main shutter 16, while the secondary shutter 74 remains open due to the attraction exerted by the magnet 80. There is therefore the temporary partial closure of the device 10 (figure 14A) in which the fuel flow, considerably reduced, reaches the tank only through the hole provided on the main shutter 16. The lifting, even minimal of the float 24 permits the driving of the secondary shutter 74 by means of the control cam 76, which is engaged with the shaft 78. The secondary shutter is then lowered until it obstructs the hole made on the main shutter 16 to obtain the temporary total closure of the device 10.

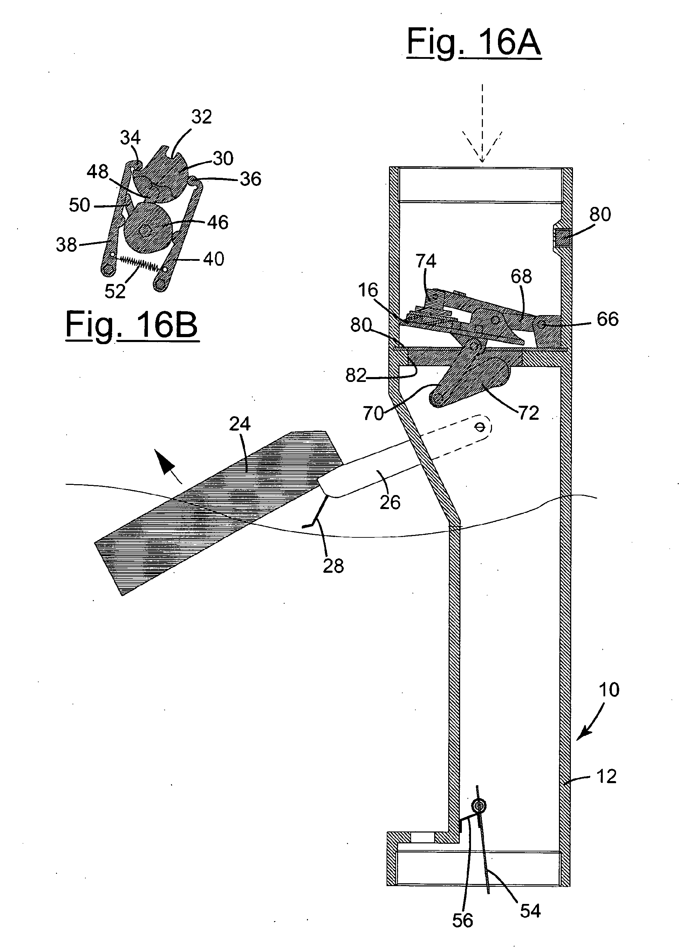

The pressure diminution of the entering fuel due to the deactivation of the discharge valve of the tanker, determines, due to the thrust exerted by the spring 20, a partial reopening of the shutter 16 (figure 16A). The opening level of the main shutter 16 is determined by the insertion of the shaped end 34 of the lever 38 in the additional notch 32' of the cam element 30 (figure 16B). In such a manner, the shutter 16 cannot return in completely open position until the fuel present in the tank has descended below the level L1. Moreover, a possible reopening of the discharge valve of the tanker will automatically lead to the total closure of the tube 12 due to the increase of pressure, thus avoiding the over-filling of the tank.

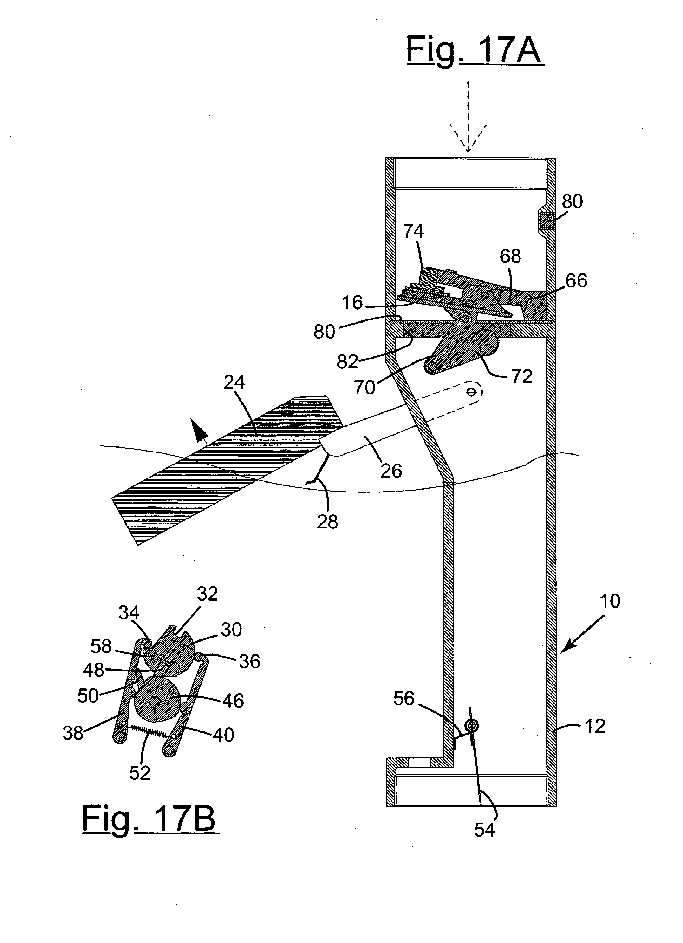

At this point, the tanker operator, before disconnecting the supply system, must wait for the emptying of the residual fuel by gravity into the system itself. The discharge of the residual fuel in a quantity defined "stopping volume", which flows in the tank before its complete and definitive closure, now occurs at reduced speed, while the float 24 slowly approaches (figure 17A) the second filling level L2 set by law.

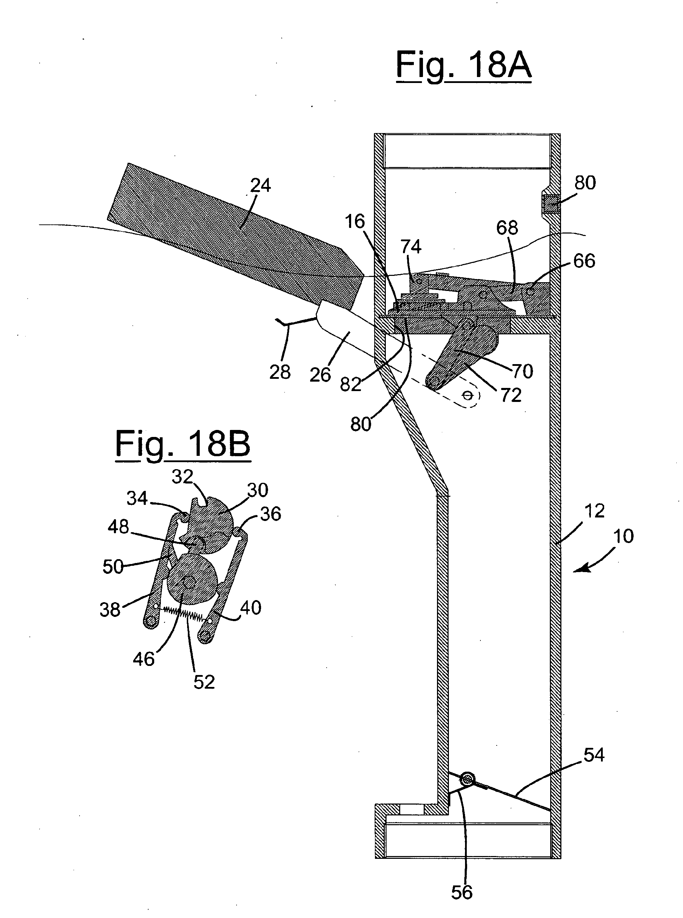

When the level L2 is nearly reached (figures 18A and 18B), the cam element 30 is newly intercepted, at its cavity 58, by the protuberance 50 of the arm 26 of the float 24, determining with a final thrust on the shutter 16 the total and definitive closure of the tube 12.

The presence in this second embodiment of the secondary shutter 74, which makes the two-stage closure of the tube 12, permits decisively lowering the water hammering, so to preserve the integrity of the entire supply system for a long period. The presence of the safety valve 100, described above with reference to figure 9, can thus be excluded.

It was thus seen that the load limiting device for tanks used for storing liquid fuels according to the present invention achieves the abovementioned object of preventing the fuel interception valve, i.e. the shutter 16, from being activated in an undesired manner due to the pressure variations in the fuel supply circuit, while in full respect of the filling parameters set by current laws.

The load limiting device for tanks used for storing liquid fuels of the present invention as conceived is susceptible to numerous modifications and variations, all coming within the same inventive concept; moreover all details can be substituted with technically equivalent elements. In practice, the used materials, shapes and sizes can be any according to technical needs.

The protective scope of the invention is therefore defined by the following claims.

## Claims

1. Load limiting device (10) for a tank used for storing liquid fuels, of the type comprising a hollow tubular body (12) which forms a tube that can be connected to the load mouth of said tank, a shutter (16) being hinged on the inner wall of said tube (12), said shutter (16) being configured to assume a first operative fuel loading position, wherein it lies on a plane substantially parallel to the vertical axis (A) of said tube (12), a second operative closed position, wherein it is horizontally positioned to completely obstruct said tube (12), and at least a third partial opening positioning, wherein it permits the passage of a limited flow of fuel, said shutter (16) being operatively connected to a float (24) arranged externally with respect to said tube (12) and hinged on the outer wall of said tube (12) by means of one or more arms (26), **characterised in that** said shutter (16) is made integral with at least one cam element (30), provided with one or more notches (32, 32') adapted to cooperate with the shaped ends (34, 36) of one or more lever elements (38, 40) driven by at least one of said arms (26) of said float (24) in order to maintain said shutter (16) in one or more of said predefined operative positions during a same functioning cycle.

2. Device (10) according to claim 1, **characterised in that** said one or more lever elements (38, 40) are hinged, at their lower ends opposite their shaped ends (34, 36), on the outer wall of said tube (12) and each have at least one protuberance (42, 44) which cooperates with a cam surface (46) provided at the pivot point of at least one of said arms (26) of said float (24).

3. Device (10) according to claim 2, **characterised in that** said cam surface (46) has one or more protuberances (48, 50) adapted to be engaged in at least one corresponding cavity (58) made on said cam element (30).

4. Device (10) according to claim 2, **characterised in that** said lever elements (38, 40) are interconnected by means of at least one elastic element (52), provided at their lower ends hinged on the wall of said tube (12).

5. Device (10) according to claim 4, **characterised in that** said at least one elastic element (52) is composed of a traction spring.

6. Device (10) according to claim 1, **characterised in that** said shutter (16) is centrally bound to a rotation shaft (14) hinged on the inner wall of said tube (12).

7. Device (10) according to claim 6, **characterised in that** on said rotation shaft (14) of said shutter (16) at least one elastic element (20) is fit, in a diametrically opposite position with respect to said cam element (30), said element (20) being loaded so as to maintain said shutter (16) in said operative fuel loading position.

8. Device (10) according to claim 7, **characterised in that** said at least one elastic element (20) is composed of a spiral spring which permits the total or partial opening of said shutter (16).

9. Device (10) according to claim 7, **characterised in that** on the inner wall of said tube (12) a pin (22) is provided which acts as a stop for said shutter (16), so that said shutter (16), in said operative fuel loading position, remains tilted about 1° with respect to said vertical axis (A) of said tube (12).

10. Device (10) according to claim 1, **characterised in that** said shutter (16) is hinged around a pin (66) on the inner wall of said tube (12) by means of one or more levers (68) and is connected to said cam element (30) by means of a pair of levers (70, 72) hinged to each other.

11. Device (10) according to claim 10, **characterised in that** said shutter (16) is provided with a through hole having considerably smaller dimensions than the overall dimensions of said shutter (16).

12. Device (10) according to claim 11, **characterised in that** a secondary shutter (74) is hinged around said pin (66) on the inner wall of said tube (12), the function of said shutter (74) being that of closing said hole made on said shutter (16) with a slight delay with respect to the closing of said shutter (16).

13. Device (10) according to claim 12, **characterised in that** said secondary shutter (74) is driven by a control cam (76) made integral with said float (24).

14. Device (10) according to claim 13, **characterised in that** said control cam (76) is configured to act on a shaft (78) which drives said secondary shutter (74).

15. Device (10) according to claim 14, **characterised in that** on the inner wall of said tube (12), one or more bushes (86, 88) are firmly fixed which serve to make the work of said one or more levers (68) independent, each of said levers (68) being mounted on the outer diameter of said one or more bushes (86, 88), with respect to the work of said shaft (78), rotatable inside said one or more bushes (86, 88).

16. Device (10) according to claim 13, **characterised in that** on the inner wall of said tube (12) a magnet (80) is provided whose function is that of maintaining said secondary shutter (74) in vertical position, or open position of said hole made on said main shutter (16), up until the intervention of said control cam (76).

17. Device (10) according to claim 1, **characterised in that** said float (24) is provided with at least one loaded elastic element (28) to permit said float (24) to maintain itself in a rest position tilted about 20° with respect to said vertical axis (A) of said tube (12).

18. Device (10) according to claim 17, **characterised in that** said elastic element (28) consists of a metal spring bound at the pivot point of at least one of said arms (26) of said float (24).

19. Device (10) according to claim 17, **characterised in that**, on said tube (12), a portion with reduced diameter section is provided which forms an outer recessing (64) in which said float (24) is made to manually return during the installation operations of said device (10) in said tank.

20. Device (10) according to claim 1, moreover comprising a deflector (54) placed inside said tube (12), below said shutter (16), which blocks the exit of the vapours present inside said tank.

21. Device (10) according to claim 20, **characterised in that** said deflector (54) is driven by a spring (56).

22. Device (10) according to claim 6, **characterised in that** said shutter (16) is provided with at least one sealing gasket (18) on its outer circumferential edge.

23. Device (10) according to claim 22, **characterised in that** said shutter (16) is supported, in said second operative closed position, on an upper abutment relief (60) and on a lower abutment relief (62) made on the inner wall of said tube (12).

24. Device (10) according to claim 10, **characterised in that**, on said inner wall of said tube (12), a closure seat (82) is made for said shutter (16), said closure seat (82) being provided with at least one sealing gasket (84) .

25. Device (110) according to any one of the preceding claims, **characterised in that**, on said tube (12), a protection casing (90) is removably applied which envelops said cam element (30), said one or more lever elements (38, 40), said shutter (16) and said control cam (76).

## Patentansprüche

1. Ladebegrenzungsvorrichtung (10) für einen zum Speichern flüssiger Brennstoffe verwendeten Tank von der Art mit einem hohlen rohrförmigen Körper (12), der ein Rohr bildet, das mit der Lademündung des Tanks verbunden sein kann, einem Verschluss (16), der an der Innenwand des Rohrs (12) angelenkt ist, wobei der Verschluss (16) ausgestaltet ist, eine erste Brennstofflade-Betriebsstellung, in der er auf einer Ebene im Wesentlichen parallel zu der vertikalen Achse (A) des Rohrs (12) liegt, eine zweite geschlossene Betriebsstellung, in der er horizontal angeordnet ist, um das Rohr (12) vollständig zu versperren, und zumindest eine dritte teilweise öffnende Stellung anzunehmen, in der er den Durchtritt einer begrenzten Durchflussmenge Brennstoff gestattet, wobei der Verschluss (16) funktional mit einem Schwimmer (24) verbunden ist, der außen in Bezug auf das Rohr (12) angeordnet und an der Außenwand des Rohrs (12) mittels eines oder mehrerer Arme (26) angelenkt ist, **dadurch gekennzeichnet, dass** der Verschluss (16) einstückig mit zumindest einem Nockenelement (30) hergestellt ist, das mit einer oder mehreren Kerben (32, 32') versehen ist, die ausgebildet sind, um mit den geformten Enden (34, 36) von einem oder mehreren Hebelelementen (38, 40) zusammenzuarbeiten, die von zumindest einem der Arme (26) des Schwimmers (24) angetrieben sind, um den Verschluss (16) in einer oder mehreren der vordefinierten Betriebsstellungen während eines gleichen Funktionszyklus zu halten.

2. Vorrichtung (10) nach Anspruch 1, **dadurch gekennzeichnet, dass** das eine oder die mehreren Hebelelemente (38, 40) an ihren unteren Enden gegenüber ihren geformten Enden (34, 36) an der Außenwand des Rohrs (12) angelenkt sind und jedes zumindest einen Vorsprung (42, 44) aufweist, der mit einer Nockenfläche (46) zusammenarbeitet, die an dem Drehpunkt von zumindest einem der Arme (26) des Schwimmers (24) vorgesehen ist.

3. Vorrichtung (10) nach Anspruch 2, **dadurch gekennzeichnet, dass** die Nockenfläche (46) einen oder mehrere Vorsprünge (48, 50) aufweist, die ausgebildet sind, um in zumindest einem entsprechenden Hohlraum (58), der an dem Nockenelement (30) hergestellt ist, in Eingriff zu stehen.

4. Vorrichtung (10) nach Anspruch 2, **dadurch gekennzeichnet, dass** die Hebelelemente (38, 40) mittels zumindest eines elastischen Elements (52) miteinander verbunden sind, das an ihren unteren Enden, die an der Wand des Rohrs (12) angelenkt sind, vorgesehen ist.

5. Vorrichtung (10) nach Anspruch 4, **dadurch gekennzeichnet, dass** das zumindest eine elastische Element (52) aus einer Zugfeder gebildet ist.

6. Vorrichtung (10) nach Anspruch 1, **dadurch gekennzeichnet, dass** der Verschluss (16) zentral mit einer Drehwelle (14) verbunden ist, die an der Innenwand des Rohrs (12) angelenkt ist.

7. Vorrichtung (10) nach Anspruch 6, **dadurch gekennzeichnet, dass** an der Drehwelle (14) des Verschlusses (16) zumindest ein elastisches Element (20) in einer diametral gegenüberliegenden Stellung mit Bezug auf das Nockenelement (30) befestigt ist, wobei das Element (20) belastet ist, um den Verschluss (16) in der Kraftstofflade-Betriebsstellung zu halten.

8. Vorrichtung (10) nach Anspruch 7, **dadurch gekennzeichnet, dass** das zumindest eine elastische Element (20) aus einer Spiralfeder gebildet ist, die das vollständige oder teilweise Öffnen des Verschlusses (16) zulässt.

9. Vorrichtung (10) nach Anspruch 7, **dadurch gekennzeichnet, dass** an der Innenwand des Rohrs (12) ein Zapfen (22) vorgesehen ist, der als ein Anschlag für den Verschluss (16) wirkt, so dass der Verschluss (16) in der Brennstofflade-Betriebsstellung um etwa 1° mit Bezug auf die vertikale Achse (A) des Rohrs (12) gekippt bleibt.

10. Vorrichtung (10) nach Anspruch 1, **dadurch gekennzeichnet, dass** der Verschluss (16) um einen Zapfen (66) an der Innenwand des Rohrs (12) mittels eines oder mehrerer Hebel (68) angelenkt ist und mit dem Nockenelement (30) mittels eines Paars aneinander angelenkter Hebel (70, 72) verbunden ist.

11. Vorrichtung (10) nach Anspruch 10, **dadurch gekennzeichnet, dass** der Verschluss (16) mit einem Durchgangsloch versehen ist, das beträchtlich kleinere Abmessungen als die Gesamtabmessungen des Verschlusses (16) aufweist.

12. Vorrichtung (10) nach Anspruch 11, **dadurch gekennzeichnet, dass** ein sekundärer Verschluss (74) um den Zapfen (66) an der Innenwand des Rohrs (12) herum angelenkt ist, wobei die Funktion des Verschlusses (74) ist, das an dem Verschluss (16) hergestellte Loch mit einer geringfügigen Verzögerung mit Bezug auf das Schließen des Verschlusses (16) zu verschließen.

13. Vorrichtung (10) nach Anspruch 12, **dadurch gekennzeichnet, dass** der sekundäre Verschluss (74) durch einen Steuernocken (76) angetrieben ist, der einstückig mit dem Schwimmer (24) hergestellt ist.

14. Vorrichtung (10) nach Anspruch 13, **dadurch gekennzeichnet, dass** der Steuernocken (76) ausgestaltet ist, um an einer Welle (78) zu wirken, die den sekundären Verschluss (74) antreibt.

15. Vorrichtung (10) nach Anspruch 14, **dadurch gekennzeichnet, dass** an der Innenwand des Rohrs (12) eine oder mehrere Buchsen (86, 88) fest fixiert sind, die dazu dienen, die Arbeit des einen oder der mehreren Hebel (68), wobei jeder der Hebel (68) an dem Außendurchmesser der einen oder der mehreren Buchsen (86, 88) montiert ist, mit Bezug auf die Arbeit der Welle (78), die im Inneren der einen oder der mehreren Buchsen (86, 88) drehbar ist, unabhängig zu machen.

16. Vorrichtung (10) nach Anspruch 13, **dadurch gekennzeichnet, dass** an der Innenwand des Rohrs (12) ein Magnet (80) vorgesehen ist, dessen Funktion ist, den sekundären Verschluss (74) bis zum Eingriff des Steuernockens (76) in einer vertikalen Stellung oder offenen Stellung des an dem Hauptverschluss (16) hergestellten Lochs zu halten.

17. Vorrichtung (10) nach Anspruch 1, **dadurch gekennzeichnet, dass** der Schwimmer (24) mit zumindest einem belasteten elastischen Element (28) versehen ist, das gestattet, dass der Schwimmer (24) sich selbst in einer Ruhestellung hält, die etwa 20° mit Bezug auf die vertikale Achse (A) des Rohrs (12) gekippt ist.

18. Vorrichtung (10) nach Anspruch 17, **dadurch gekennzeichnet, dass** das elastische Element (28) aus einer Metallfeder besteht, die an dem Drehpunkt von zumindest einem der Arme (26) des Schwimmers (24) angebunden ist.

19. Vorrichtung (10) nach Anspruch 17, **dadurch gekennzeichnet, dass** an dem Rohr (12) ein Abschnitt mit einem Querschnitt mit verringertem Durchmesser vorgesehen ist, der eine äußere Ausnehmung (64) bildet, in welche der Schwimmer (24) während Einbauarbeitsgängen der Vorrichtung (10) in den Tank von Hand zurückgeführt wird.

20. Vorrichtung (10) nach Anspruch 1, die darüber hinaus eine Ablenkeinrichtung (54) umfasst, die im Inneren des Rohrs (12) unterhalb des Verschlusses (16) platziert ist, welche den Austritt von in dem Tank vorhandenen Dämpfen blockiert.

21. Vorrichtung (10) nach Anspruch 20, **dadurch gekennzeichnet, dass** die Ablenkeinrichtung (54) durch eine Feder (56) angetrieben ist.

22. Vorrichtung (10) nach Anspruch 6, **dadurch gekennzeichnet, dass** der Verschluss (16) an seinem Außenumfangsrand mit zumindest einer Dichtung (18) versehen ist.

23. Vorrichtung (10) nach Anspruch 22, **dadurch gekennzeichnet, dass** der Verschluss (16) in der zweiten geschlossenen Betriebsstellung an einer oberen Anschlagleiste (60) und an einer unteren Anschlagleiste (62), die an der Innenwand des Rohrs (12) hergestellt sind, abgestützt ist.

24. Vorrichtung (10) nach Anspruch 10, **dadurch gekennzeichnet, dass** an der Innenwand des Rohrs (12) ein Schließsitz (82) für den Verschluss (16) hergestellt ist, wobei der Schließsitz (82) mit zumindest einer Dichtung (84) versehen ist.

25. Vorrichtung (10) nach einem der vorhergehenden Ansprüche, **dadurch gekennzeichnet, dass** an dem Rohr (12) ein Schutzgehäuse (90) abnehmbar angebracht ist, das das Nockenelement (30), das eine oder die mehreren Hebelelemente (38, 40), den Verschluss (16) und den Steuernocken (76) umhüllt.

## Revendications

1. Dispositif de limitation de charge (10) pour un réservoir utilisé pour le stockage de carburants liquides, du type comprenant un corps tubulaire creux (12) qui forme un tube qui peut être connecté à l'embouchure de charge dudit réservoir, un obturateur (16) étant fixé en charnière sur la paroi intérieure dudit tube (12), ledit obturateur (16) étant configuré pour prendre une première position opérationnelle de charge de carburant, dans laquelle il repose sur un plan sensiblement parallèle à l'axe vertical (A) dudit tube (12), une deuxième position opérationnelle fermée, dans laquelle il est positionné horizontalement pour obstruer complètement ledit tube (12), et au moins une troisième position d'ouverture partielle, dans laquelle il permet le passage d'un flux limité de carburant, ledit obturateur (16) étant connecté opérationnellement à un flotteur (24) agencé à l'extérieur dudit tube (12) et fixé en charnière sur la paroi extérieure dudit tube (12) au moyen d'un ou plusieurs bras (26), **caractérisé en ce que** ledit obturateur (16) fait unité avec au moins un élément de came (30), muni d'une ou plusieurs encoches (32, 32') aptes à coopérer avec les extrémités formées (34, 36) d'un ou plusieurs éléments de levier (38, 40) entraînés par au moins l'un desdits bras (26) dudit flotteur (24) pour maintenir ledit obturateur (16) à une ou plusieurs desdites positions opérationnelles prédéfinies au cours d'un même cycle de fonctionnement.

2. Dispositif (10) selon la revendication 1, **caractérisé en ce que** lesdits un ou plusieurs éléments de levier (38, 40) sont fixés en charnière, à leurs extrémités inférieures opposées à leurs extrémités formées (34, 36), sur la paroi extérieure dudit tube (12) et **en ce que** chacun d'eux a au moins une protubérance (42, 44) qui coopère avec une surface de came (46) aménagée au point de pivot d'au moins l'un desdits bras (26) dudit flotteur (24).

3. Dispositif (10) selon la revendication 2, **caractérisé en ce que** ladite surface de came (46) a une ou plusieurs protubérances (48, 50) aptes à être engagées dans au moins une cavité correspondante (58) réalisée sur ledit élément de came (30).

4. Dispositif (10) selon la revendication 2, **caractérisé en ce que** lesdits éléments de levier (38, 40) sont interconnectés par le biais d'au moins un élément élastique (52), fourni à leurs extrémités inférieures à fixation en charnière sur la paroi dudit tube (12).

5. Dispositif (10) selon la revendication 4, **caractérisé en ce que** ledit au moins un élément élastique (52) est composé d'un ressort de traction.

6. Dispositif (10) selon la revendication 1, **caractérisé en ce que** ledit obturateur (16) est lié dans sa zone centrale à un arbre de rotation (14) fixé en charnière sur la paroi intérieure dudit tube (12).

7. Dispositif (10) selon la revendication 6, **caractérisé en ce que**, sur ledit arbre de rotation (14) dudit obturateur (16), il est monté au moins un élément élastique (20) dans une position diamétralement opposée au dit élément de came (30), ledit élément (20) étant mis en tension de manière à maintenir ledit obturateur (16) dans ladite position opérationnelle de chargement de carburant.

8. Dispositif (10) selon la revendication 7, **caractérisé en ce que** ledit au moins un élément élastique (20) se compose d'un ressort en spirale qui permet l'ouverture totale ou partielle dudit obturateur (16).

9. Dispositif (10) selon la revendication 7, **caractérisé en ce que**, sur la paroi intérieure dudit tube (12), il est fourni une broche (22) qui sert de butée pour ledit obturateur (16), de sorte que ledit obturateur (16), dans ladite position opérationnelle de chargement de carburant, reste incliné d'environ 1° par rapport au dit axe vertical (A) dudit tube (12).

10. Dispositif (10) selon la revendication 1, **caractérisé en ce que** ledit obturateur (16) est fixé en charnière autour d'une broche (66) sur la paroi intérieure dudit tube (12) au moyen d'un ou plusieurs leviers (68) et est connecté au dit élément de came (30) au moyen d'une paire de leviers (70, 72) fixés en charnière l'un sur l'autre.

11. Dispositif (10) selon la revendication 10, **caractérisé en ce que** ledit obturateur (16) est muni d'un trou traversant ayant des dimensions beaucoup plus petites que les dimensions hors tout dudit obturateur (16).

12. Dispositif (10) selon la revendication 11, **caractérisé en ce qu'**un obturateur secondaire (74) est fixé en charnière autour de ladite broche (66) sur la paroi intérieure dudit tube (12), la fonction dudit obturateur (74) étant de fermer ledit trou constitué sur ledit obturateur (16) avec un léger délai par rapport à la fermeture dudit obturateur (16).

13. Dispositif (10) selon la revendication 12, **caractérisé en ce que** ledit obturateur secondaire (74) est commandé par une came de commande (76) faisant partie intégrante dudit flotteur (24).

14. Dispositif (10) selon la revendication 13, **caractérisé en ce que** ladite came de commande (76) est configurée pour agir sur un arbre (78) qui commande ledit obturateur secondaire (74).

15. Dispositif (10) selon la revendication 14, **caractérisé en ce que**, sur la paroi intérieure dudit tube (12), il est fermement fixé une ou plusieurs bagues (86, 88) qui servent à rendre le fonctionnement desdits un ou plusieurs leviers (68) indépendant, chacun desdits leviers (68) étant monté sur la périphérie extérieure desdites une ou plusieurs bagues (86, 88), par rapport au fonctionnement dudit arbre (78), pouvant tourner à l'intérieur desdites une ou plusieurs bagues (86, 88).

16. Dispositif (10) selon la revendication 13, **caractérisé en ce que**, sur la paroi intérieure dudit tube (12), il est fourni un aimant (80) dont la fonction est de maintenir ledit obturateur secondaire (74) en position verticale, ou position ouverte dudit trou constitué sur ledit obturateur principal (16), jusqu'à l'intervention de ladite came de commande (76).

17. Dispositif (10) selon la revendication 1, **caractérisé en ce que** ledit flotteur (24) est muni d'au moins un élément élastique mis en tension (28) pour permettre au dit flotteur (24) de se maintenir à une position de repos inclinée d'environ 20° par rapport au dit axe vertical (A) dudit tube (12).

18. Dispositif (10) selon la revendication 17, **caractérisé en ce que** ledit élément élastique (28) se compose d'un ressort métallique lié au point de pivot d'au moins l'un desdits arbres (26) dudit flotteur (24).

19. Dispositif (10) selon la revendication 17, **caractérisé en ce que**, sur ledit tube (12), il est fourni une portion avec une section de diamètre réduite qui forme un évidement extérieur (64) dans lequel ledit flotteur (24) est amené à retourner manuellement au cours des opérations d'installation dudit dispositif (10) dans ledit réservoir.

20. Dispositif (10) selon la revendication 1, comprenant en outre un déflecteur (54) placé à l'intérieur dudit tube (12), au-dessous dudit obturateur (16), qui bloque la sortie des vapeurs présentes à l'intérieur dudit réservoir.

21. Dispositif (10) selon la revendication 20, **caractérisé en ce que** ledit déflecteur (54) est commandé par un ressort (56).

22. Dispositif (10) selon la revendication 6, **caractérisé en ce que** ledit obturateur (16) est muni d'au moins un joint d'étanchéité (18) sur son bord circonférentiel extérieur.

23. Dispositif (10) selon la revendication 22, **caractérisé en ce que** ledit obturateur (16) est supporté, dans ladite deuxième position opérationnelle fermée, sur une portée d'aboutement supérieure (60) et sur une portée d'aboutement inférieure (62) constitués sur la paroi intérieure dudit tube (12).

24. Dispositif (10) selon la revendication 10, **caractérisé en ce que**, sur ladite paroi intérieure dudit tube (12), un siège de fermeture (82) est constitué pour ledit obturateur (16), ledit siège de fermeture (82) étant muni d'au moins un joint d'étanchéité (84).

25. Dispositif (10) selon l'une quelconque des revendications précédentes, **caractérisé en ce que**, sur ledit tube (12), il est appliqué de manière amovible un carter de protection (90) qui enveloppe ledit élément de came (30), ledit un ou plusieurs éléments de levier (38, 40), ledit obturateur (16) et ladite came de commande (76).
